**Europäisches Patentamt**

**European Patent Office**

**Office européen des brevets**

(19)

(11) Veröffentlichungsnummer: **0 027 916**
**B1**

(12)

# EUROPÄISCHE PATENTSCHRIFT

(45) Veröffentlichungstag der Patentschrift:
**25.05.83**

(51) Int. Cl.³: **G 01 N 27/00,** G 01 N 27/26

(21) Anmeldenummer: **80105938.7**

(22) Anmeldetag: **01.10.80**

(54) **Eintauchmessonde.**

(30) Priorität: **25.10.79 DE 7930207 U**

(43) Veröffentlichungstag der Anmeldung:
**06.05.81 Patentblatt 81/18**

(45) Bekanntmachung des Hinweises auf die Patenterteilung:
**25.05.83 Patentblatt 83/21**

(84) Benannte Vertragsstaaten:
**AT BE CH DE FR GB IT LI NL SE**

(56) Entgegenhaltungen:
**DE-A-2 262 748**
**FR-A-2 131 286**
**»Messen, Steuern und Regeln in der Chemischen**
**Technik« herausgegeben von Hengstenberg,**
**Sturm, Winkler, zweite Auflage Springer-Verlag**
**1964. S. 788 und 789**

(73) Patentinhaber: **SCHERING AKTIENGESELLSCHAFT**
**Berlin und Bergkamen, Waldstrasse 14 Postfach 1540,**
**D-4619 Bergkamen (DE)**

(72) Erfinder: **Brüggemann, Klaus, Dipl.-Ing., Im Dahl 50,**
**D-4400 Münster (DE)**
Erfinder: **Schmitz, Heinz-Willi, Schweriner Strasse 2,**
**D-4750 Unna (DE)**

## Eintauchmeßsonde

Für elektrochemische Messungen in korrosiven Flüssigkeiten sind Meßsonden aus Emaille, Kunststoff und Glas bekannt.

Übliche Meßsonden und deren Bauform sind beispielsweise beschrieben in »Messen, Steuern und Regeln in der Chemischen Technik« von Hengstenberg/Sturm/Winkler, Springer Verlag, Seiten 788, 789, 2. Aufl. 1964.

Bei der bekannten Emaille-Sonde ist die Meßelektrode am unteren Endstück eines Sondenträgers aus emailliertem Stahl aufgeschmolzen und vollkommen mit dem Sondenträger integriert. Die gute Korrosionsbeständigkeit und hohe dynamische Belastbarkeit werden also durch einen enormen fertigungstechnischen und damit kostenträchtigen Aufwand erreicht. Außerdem wird nur jeweils eine Information, z. B. der pH-Wert, erhalten. Bei einem Schadensfall mit Zerstörung der Emaillieschicht liegen die Reparaturkosten in der Größenordnung des Neuwertes einer Sonde. Da ein solcher Effekt nur vom Hersteller zu beheben ist, entstehen dem Benutzer wegen langer Reparaturzeiten hohe Aussetzraten.

Die sehr viel kostengünstigeren Kunststoff-Sonden sind, insbesondere bei größeren Baulängen, den hohen dynamischen Belastungen in einem Rührwerkskessel nicht gewachsen.

Bei Glas-Sonden, die zwar eine hervorragende Korrosionsbeständigkeit aufweisen, ist die dynamische Belastbarkeit hinsichtlich Vibrationen und Schwingungen ebenfalls nur gering. Baulängen über 800 mm sind daher in Rührwerkskessel kaum einsetzbar.

Es bestand daher ein Bedürfnis nach einfach und kostengünstig zu fertigenden Meßsonden, die eine hohe Korrosionsbeständigkeit und gute dynamische Belastbarkeit, auch bei größeren Baulängen von über 1,5 m, aufweisen.

Die Erfindung betrifft eine Eintauchmeßsonde mit einem Trägerrohr (1), einem am oberen Teil des Trägerrohrs angebrachten Montageflansch (2), einem das untere Ende des Trägerrohrs verschließenden Endstück (4, 5), in dem Meßwertgeber (6) gehaltert sind, die dadurch gekennzeichnet ist, daß

— das Trägerrohr (1) aus Stahl besteht und unterhalb des Montageflanschs (2) von einem an der Unterseite des Montageflanschs (2) befestigten austauschbaren Rohr (3) aus Kunststoff dichtend umschlossen ist, und
— das Endstück (4, 5) aus einem am unteren Ende des Kunststoffrohrs (3) angebrachten Kunststoffteil (4) sowie einem von diesem gehalterten Trägerteil (5) für die Meßwertgeber (6) besteht.

Eine derart gestaltete Meßsonde erlaubt die gleichzeitige Messung verschiedener Meßgrößen. Die Meßinstrumente sind leicht auswechselbar. Das Kunststoffrohr kann in Abhängigkeit von der Art des korrosiven Mediums ausgewählt und leicht ausgetauscht werden.

Wie der betriebliche Einsatz einer Sonde mit PVDF-Ummantelung und einer Baulänge von 2 m einem Rührwerk bisher gezeigt hat, ist die erfindungsgemäße Meßsonde selbst für Potentialmessungen per Glaselektrode bei mehr als 100°C und 3 bar geeignet.

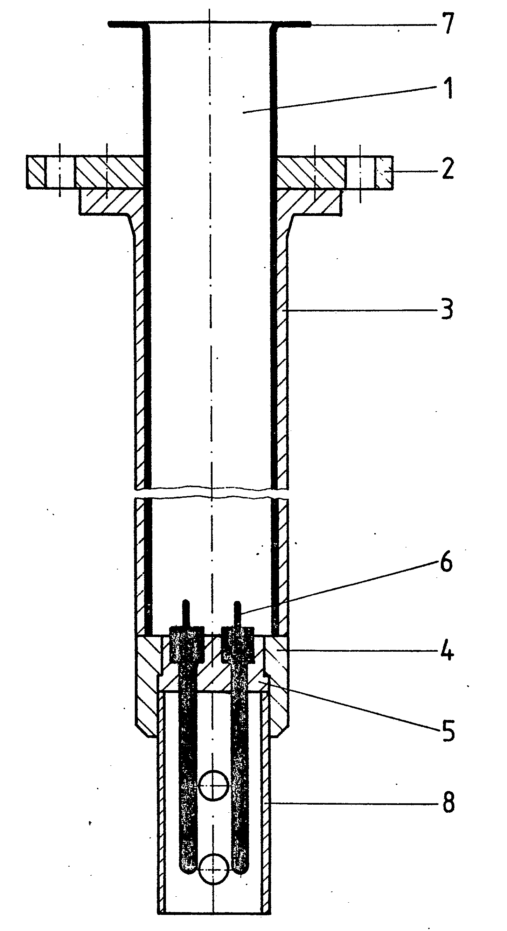

Eine vorteilhafte Ausführungsform der Erfindung wird anhand der Zeichnung erläutert.

Bei der Meßsonde der Zeichnung ist das Edelstahlrohr 1 an seinem oberen Ende mit einem Vorschweißbördel 7 versehen, worauf gegebenenfalls Meßgeräte montiert werden können. In seinem oberen Bereich wird das Edelstahlrohr 1 von einem Flansch 2 zur Montage auf den Reaktor umgeben. Unterhalb des Flansches 2 wird das Rohr von einem Kunststoffrohr 3 umschlossen. Es ist über einem Vorschweißbund mit dem Flansch verschraubt. Das Kunststoffrohr 3 wird am unteren Ende durch das Endstück 4 abgeschlossen. In dem Endstück ist der Instrumententräger 5 angebracht, der eine gewünschte Anzahl von Meßinstrumenten 6 aufnehmen kann. Ein durchlochtes Rohrstück 8 schützt die Meßinstrumente. Kunststoffrohr 3, Endstück 4 und Instrumententräger 5 mit Meßinstrumenten 6 dichten das Edelstahlrohr 1 gegenüber den korrosiven Medien dichtend ab.


**Patentanspruch**

Eintauchmeßsonde mit einem Trägerrohr (1), einem am oberen Teil des Trägerrohrs angebrachten Montageflansch (2), einem das untere Ende des Trägerrohrs verschließenden Endstück (4, 5), in dem Meßwertgeber (6) gehaltert sind, dadurch gekennzeichnet, daß

— das Trägerrohr (1) aus Stahl besteht und unterhalb des Montageflanschs (2) von einem an der Unterseite des Montageflanschs (2) befestigten austauschbaren Rohr (3) aus Kunststoff dichtend umschlossen ist, und
— das Endstück (4, 5) aus einem am unteren Ende des Kunststoffrohrs (3) angebrachten Kunststoffteil (4) sowie einem von diesem gehalterten Trägerteil (5) für die Meßwertgeber (6) besteht.


**Claim**

Immersion probe having a carrier tube (1), a mounting flange (2) fitted on the upper part of the carrier tube, and an end piece (4, 5) closing off the lower end of the carrier tube, in which end piece measurement sensors (6) are mounted, characterised in that

- the carrier tube (1) consists of steel and, below the mounting flange (2), is surrounded in such a manner as to produce a seal by a replaceable tube (3) made of plastics and attached to the underside of the mounting flange (2), and
- the end piece (4, 5) comprises a plastics section (4) fitted on the lower end of the plastics tube (3) and a carrier piece (5), retained by the plastics section, for the measurement sensors (6).

## Revendication

Sonde de mesure par immersion comportant un tube support (1), une bride d'assemblage (2) montée à la partie supérieure dudit tube support, et un bouchon (4, 5) obturant l'extrémité inférieure dudit tube support, dans lequel sont fixées des transmetteurs (6) de la valeur mesurée, sonde caractérisée en ce que:

- le tube support (1) est en acier et est entouré de façon étanche sous la bride d'assemblage (2), par un tube (3) en matière plastique monté de façon amovible à la face inférieure de la bride d'assemblage (2), et
- le bouchon (4, 5) est formé d'une pièce en matière plastique (4) fixée à l'extrémité inférieure du tube (3) en matière plastique ainsi que d'une pièce support (5) fixée à celle-ci pour les transmetteurs (6) de la valeur mesurée.